# EUROPEAN PATENT APPLICATION

(11) **EP 4 817 905 A1**
(43) Date of publication of application: **07.10.2026**
(21) Application number: 25168641.6
(22) Date of filing: 04.04.2025
(51) Int. Cl.: B60H 1/00, F16K 11/085

(54) **VALVE ASSEMBLY FOR CONTROLLING A FLOW OF A FIRST LIQUID AND A FLOW OF A SECOND LIQUID IN A VEHICLE, VALVE SYSTEM, AND METHOD FOR CONTROLLING A FLOW OF A FIRST LIQUID AND A FLOW OF A SECOND LIQUID IN A VEHICLE**

(71) Applicant: Volvo Car Corporation, 405 31 Göteborg (SE)
(72) Inventor: ANDERSSON, Daniella Eugenia, 40531 Göteborg (SE); JAMSHIDI, Hamed, 40531 Göteborg (SE); SOYDAN, Faruk, 40531 Göteborg (SE)
(74) Representative: Kransell & Wennborg KB

(57) **Abstract**

The disclosure relates to a valve assembly (24) for controlling a flow of a first liquid (36) and a flow of a second liquid (40) in a vehicle. The valve assembly (24) comprises a valve body (28) having a first supply path (34) for the first liquid (36), a first return path (50) for the first liquid (36), a second supply path (38) for the second liquid (40), a second return path (52) for the second liquid (40), a first outlet (42) for supplying liquid (36, 40) to a first component, a first inlet (54) for receiving liquid (36, 40) from the first component, a second outlet (46) for supplying liquid (36, 40) to a second component, and a second inlet (56) for receiving liquid (36, 40) from the second component. The valve assembly (24) further comprises a singular valve element (64) movably supported on or in the valve body (28). Moreover, the disclosure is directed to a valve system comprising at least two valve assemblies (24) and to a method for controlling a flow of a first liquid (36) and a flow of a second liquid (40) in a vehicle using a valve assembly (24).

## Description

### TECHNICAL FIELD

The present disclosure relates to a valve assembly for controlling a flow of a first liquid and a flow of a second liquid in a vehicle.

Moreover, the present disclosure relates to a valve system comprising at least two valve assemblies.

Furthermore, the present disclosure relates to a method for controlling a flow of a first liquid and a flow of a second liquid in a vehicle using a valve assembly.

### BACKGROUND ART

Today's vehicles comprise a large number of components that require temperature control. Examples for such components are an engine and a gearbox in internal combustion engine vehicles. In fully electric vehicles, such components may include a traction battery, an inverter and an electric machine for propelling the vehicle. Regardless of a type of the propulsion system, further components like a passenger cabin, i.e. the air in the passenger cabin, or a radiator of the vehicle may be subject to temperature control.

In order to achieve temperature control, a liquid coolant may be used. It is noted that in the present disclosure, the word coolant is used regardless of the fact whether it is used for cooling or for heating a component. Often, components require heating or cooling depending on operating conditions. For example, a traction battery, a passenger cabin or a radiator may need to be heated in wintertime or cooled in summertime.

Thus, a large number of components of a vehicle may need to be provided with coolant. Complex valve systems and tubings may be required to achieve a desired distribution of coolant to a plurality of components.

### SUMMARY

It is therefore an objective of the present disclosure to provide an improved and particularly simplified valve assembly for providing coolant to components of a vehicle.

The problem is at least partially solved or alleviated by the subject matter of the independent claims of the present disclosure, wherein further examples are incorporated in the dependent claims.

According to a first aspect, there is provided a valve assembly for controlling a flow of a first liquid and a flow of a second liquid in a vehicle. The valve assembly comprises a valve body having
- a first supply path for the first liquid,
- a first return path for the first liquid,
- a second supply path for the second liquid,
- a second return path for the second liquid,
- a first outlet for supplying liquid to a first component,
- a first inlet for receiving liquid from the first component,
- a second outlet for supplying liquid to a second component, and
- a second inlet for receiving liquid from the second component.
The valve assembly further comprises a singular valve element movably supported on or in the valve body for at least
- selectively branching off first liquid from the first supply path to the first component and returning first liquid from the first component into the first return path, or
- selectively branching off first liquid from the first supply path to the second component and returning first liquid from the second component into the first return path, or
- selectively branching off second liquid from the second supply path to the first component and returning second liquid from the first component into the second return path, or
- selectively branching off second liquid from the second supply path to the second component and returning second liquid from the second component into the second return path.
It is noted that also any combination of the above steps of selectively branching off liquid may be accomplished by the singular valve element. In the context of the present disclosure, the first liquid and the second liquid may be of a different temperature. In particular, the first liquid may be warmer than the second liquid or vice versa. Thus, one of the first liquid and the second liquid may be used for heating the first component and/or the second component and the respective other one of the first liquid and the second liquid may be used for cooling the first component and/or the second component. Still, the first liquid and the second liquid may be of the same kind of liquid, e.g. water or water-based, but separated in different liquid circuits. In case the first liquid and the second liquid are used to control a temperature of the first component and/or the second component, the first liquid and the second liquid are coolants, i.e. a first coolant and a second coolant. The valve body may be understood as a housing at least partially enclosing or supporting the singular valve element. The singular valve element is movably supported on or in the valve body. In an example, the valve element may be rotatable relative to the valve body. In this example, both the valve element and a portion of the valve body enclosing or supporting the valve element may be rotationally symmetric. It is understood that the singular valve element and the valve body may be fitted to one another in a liquid-tight manner.

When using the valve assembly, the first liquid may flow through the first supply path. From there, the first liquid may be selectively supplied to the first component and/or to the second component depending on a position of the singular valve element with respect to the valve body. This means that the first liquid may be supplied to the first component only, to the second component only or to both the first component and the second component. The supply of the first liquid to the first component may be achieved through the first outlet. The supply of the first liquid to the second component may be achieved through the second outlet.

Moreover, when using the valve assembly, first liquid may also flow through the first return path. For example, the first supply path and the first return path may form part of a first circuit in which the first liquid circulates. The first liquid may return from the first component via the first inlet and, depending on the position of the singular valve element, the first liquid may be directed into the first return path. Additionally or alternatively, the first liquid may return from the second component via the second inlet and, depending on the position of the singular valve element, the first liquid may be directed into the first return path. While in interaction with the first component and/or the second component, the first liquid may control a temperature of the first component and/or the second component by absorbing heat from the first component and/or the second component or by discharging heat to the first component and/or the second component.

It is noted that a flow rate of first liquid in the first supply path and/or the first return path may be significantly higher than a flow rate of first liquid that is branched off therefrom and supplied to the first component and/or the second component.

When using the valve assembly, the second liquid may flow through the second supply path. From there, the second liquid may be selectively supplied to the first component and/or to the second component depending on a position of the singular valve element with respect to the valve body. This means that the second liquid may be supplied to the first component only, to the second component only or to both the first component and the second component. The supply of second liquid to the first component may be achieved through the first outlet. The supply of the first liquid to the second component may be achieved through the second outlet.

Moreover, when using the valve assembly, second liquid may also flow through the second return path. For example, the second supply path and the second return path may form part of a second circuit in which the second liquid circulates. The second liquid may return from the first component via the first inlet, the singular valve element may discharge the second liquid to the first return path and, depending on the position of the singular valve element, the second liquid may be directed into the second return path. Additionally or alternatively, the second liquid may return from the second component via the second inlet and, depending on the position of the singular valve element, the second liquid may be directed into the second return path. While in interaction with the first component and/or the second component, the second liquid may control a temperature of the first component and/or the second component by absorbing heat from the first component and/or the second component or by discharging heat to the first component and/or the second component.

It is noted that a flow rate of second liquid in the second supply path and/or the second return path may be significantly higher than a flow rate of second liquid that is branched off therefrom and supplied to the first component and/or the second component.

Branching off first liquid from the first supply path is to be understood in that a portion of the flow of first liquid is withdrawn from the first supply path while a flow of first liquid in the first supply path is maintained. The same applies when returning first liquid into the first return path. Optionally, the first supply path and/or the first return path comprise a branch line configured to branch off first liquid or return first liquid respectively. As has been mentioned before, the first supply path and the first return path may form part of a first circuit in which the first liquid circulates. Thus, the first liquid may circulate through the valve assembly, wherein at least a portion of the first liquid bypasses the first component and the second component. From this first circuit, first liquid may selectively be branched off to the first component and/or to the second component by allowing a flow of a portion of the first liquid via the singular valve element. Selectively branching off first liquid to the first component and/or to the second component is achieved by moving the singular valve element into dedicated positions with respect to the valve body.

Branching off second liquid from the second supply path is to be understood in that a portion of the flow of second liquid is withdrawn from the second supply path while a flow of second liquid in the second supply path is maintained. The same applies when returning second liquid into the second return path. Optionally, the second supply path and/or the second return path comprise a branch line configured to branch off second liquid or return second liquid respectively. As has been mentioned before, the second supply path and the second return path may form part of a second circuit in which the second liquid circulates. Thus, the second liquid may circulate through the valve assembly, wherein at least a portion of the second liquid bypasses the first component and the second component. From this second circuit, second liquid may selectively be branched off to the first component and/or to the second component by allowing a flow of a portion of the second liquid via the singular valve element. Selectively branching off second liquid to the first component and/or to the second component is achieved by moving the singular valve element into dedicated positions with respect to the valve body.

An advantage of the valve assembly according to the present disclosure is that only one singular valve element is necessary in order to selectively branch off first liquid and/or second liquid to the first component and/or to the second component. This implies that only one valve element needs to be moved relative to the valve body. This renders the valve assembly simple, easily actuatable and reliable even though a total of nine different permutations of liquid provision are possible: not branching off any liquid and therefore not providing any liquid to any of the components, only branching off first liquid to the first component, only branching off first liquid to second component, only branching off second liquid to the first component, only branching off second liquid to second component, branching off first liquid to first component and to the second component, branching off second liquid to the first component and to the second component, branching off first liquid to first component and branching off second liquid to second component, and branching off first liquid to second component and branching off second liquid to first component. This also renders the valve assembly compact.

In an example, the first supply path, the second supply path, the first outlet and the second outlet are arranged in a first layer of the valve assembly. The first return path, the second return path, the first inlet and the second inlet are arranged in a second layer of the valve assembly. The singular valve element spans over the first layer and over the second layer. This is to be understood in that said supply paths, outlets and inlets are arranged on the respective layer of the valve assembly only. The singular valve element spanning over the first layer and over the second layer implies that also the valve body spans over the first layer and the second layer of the valve assembly. However, the singular valve element, which is coupled to the valve body in a liquid-tight manner, fluidically separates the first layer from the second layer. Thus, neither first liquid nor second liquid may change from the first layer to the second layer or vice versa directly through the valve body or the valve element. If first liquid and/or second liquid that enters the valve assembly on the first layer is branched off to the first component and/or to the second component, the first liquid and/or the second liquid re-enters the valve assembly on the second layer after having flown through the first component and/or the second component. Separating the first layer, which may also be referred to as supply layer, from the second layer, which may also be referred to as return layer, has the effect that mixing of the supply and return flows within the valve assembly is prevented, thereby enabling an efficient thermal conditioning of the first component and/or of the second component. Also, a separated first layer and second layer facilitates the use of only one singular valve element for selectively controlling the flow of first liquid and second liquid.

In an example, the singular valve element comprises a first recess extending in the first layer only. A circumferential length of the first recess is at least one of:
- at least as long as a minimum circumferential distance between the first supply path and the first outlet,
- at least as long as a minimum circumferential distance between the first supply path and the second outlet,
- at least as long as a minimum circumferential distance between the second supply path and the first outlet,
- at least as long as a minimum circumferential distance between the second supply path and the second outlet.

The first recess is to be understood as a deviation of an outer shape of the singular valve element from an inner shape of the valve body in which the singular valve element is at least partially housed. Thus, at the first recess, the singular valve element and the valve body may form a first pocket or channel between an outer surface of the singular valve element and an inner surface of the valve body. The first pocket or channel may serve as a connecting passage between the first supply path and the first outlet, between the first supply path and the second outlet, between the second supply path and the first outlet or between the second supply path and the second outlet, depending on the position of the valve element relative to the valve body. In order to do so, the circumferential length of the first recess may be at least as long as the minimum circumferential distance between the supply path and the outlet to be fluidically connected. The circumferential length of the first recess is to be understood as a maximum extension of the first recess along a circumference of the singular valve element. The extension of the first recess is measured as a length of a circular arc portion that extends on said circumference and whose middle axis is identical to the rotational axis of the singular valve element. The circumferential distance between a supply path and an outlet is measured as a length of a circular arc portion that connects the respective supply path and the respective outlet. The minimum circumferential distance between a supply path and an outlet is the closest distance on said arc connecting portions of the respective supply path and the respective outlet that are closest to one another. By contrast, a maximum circumferential distance between a supply path and an outlet is the furthest distance on said arc connecting portions of the respective supply path and the respective outlet that are furthest from one another. In simplified words, the above specified circumferential length of the first recess makes the first recess span from the respective supply path to the respective outlet, thereby establishing a fluidic connection there between if the valve element is in the associated relative position with respect to the valve body.

In an example, the singular valve element further comprises a second recess extending in the first layer only. A circumferential length of the second recess is at least as long as the minimum circumferential distance between the second supply path and the first outlet. The second recess is to be understood as a deviation of the outer shape of the singular valve element from the inner shape of the portion of the valve body in which the singular valve element is at least partially housed. Thus, at the second recess, the singular valve element and the valve body may form a second pocket or channel between the outer surface of the singular valve element and the inner surface of the valve body. The second pocket or channel may serve as a connecting passage between the second supply path and the first outlet if the valve element is in an associated position relative to the valve body. In order to do so, the circumferential length of the second recess may be at least as long as the minimum circumferential distance between the second supply path and the first outlet. The circumferential length of the second recess is to be understood as a maximum extension of the second recess on a circumference of the singular valve element. The extension of the second recess is measured as a length of a circular arc portion that extends on said circumference and whose middle axis is identical to the rotational axis of the singular valve element. The circumferential distance between the second supply path and the first outlet is measured as a length of a circular arc portion that connects the second supply path and the first outlet. In simplified words, the above specified circumferential length of the second recess makes the second recess span from the second supply path to the first outlet, thereby establishing a fluidic connection there between if the valve element is in the associated relative position with respect to the valve body.

In an example, the singular valve element further comprises a first channel extending in the first layer only. The first channel extends between the second recess and an outer surface of the singular valve element. A maximum circumferential distance between an opening of the first channel on the outer surface of the singular valve element and the second recess and/or a minimum circumferential distance between the opening of the first channel and the second recess is at least one of:
- the maximum circumferential distance between the opening of the first channel and the second recess is at least as long as the minimum circumferential distance between the first supply path and the first outlet, and the minimum circumferential distance between the opening of the first channel and the second recess is maximally as long as the maximum circumferential distance between the first supply path and the first outlet,
- the maximum circumferential distance between the opening of the first channel and the second recess is at least as long as the minimum circumferential distance between the first supply path and the second outlet, and the minimum circumferential distance between the opening of the first channel and the second recess is maximally as long as the maximum circumferential distance between the first supply path and the second outlet,
- the maximum circumferential distance between the opening of the first channel and the second recess is at least as long as the minimum circumferential distance between the second supply path and the second outlet, and the minimum circumferential distance between the opening of the first channel and the second recess is maximally as long as the maximum circumferential distance between the second supply path and the second outlet.

The first channel may be formed as a through hole that fluidically connects the second recess and the outer surface of the singular valve element in the first layer. The circumferential distance between the opening of the first channel on the outer surface of the singular valve element and the second recess is measured as a length of a circular arc portion whose middle axis is identical to the rotational axis of the singular valve element. The minimum circumferential distance between the opening of the first channel and the second recess is the closest distance on said arc connecting portions of the opening of the first channel and of the second recess that are closest to one another. By contrast, a maximum circumferential distance between the opening of the first channel and the second recess is the furthest distance on said arc connecting portions of the opening of the first channel and of the second recess that are furthest from one another. The above-specified constraints of maximum and minimum circumferential distance between the opening of the first channel and the second recess ensure that the circumferential distance is neither too short nor too long in order to make the first channel and the second recess establish a fluidic connection between a respective supply path and a respective outlet if the valve element is in the associated relative position with respect to the valve body.

In an example, the singular valve element further comprises a third recess extending in the second layer only. A circumferential length of the third recess is at least one of:
- at least as long as a minimum circumferential distance between the first return path and the first inlet,
- at least as long as a minimum circumferential distance between the first return path and the second inlet,
- at least as long as a minimum circumferential distance between the second return path and the first inlet,
- at least as long as a minimum circumferential distance between the second return path and the second inlet.

The third recess is to be understood as a deviation of the outer shape of the singular valve element from the inner shape of the portion of the valve body in which the singular valve element is at least partially housed. Thus, at the third recess, the singular valve element and the valve body may form a third pocket or channel between the outer surface of the singular valve element and the inner surface of the cavity of the valve body. The first pocket may serve as a connecting passage between the first return path and the first inlet, between the first return path and the second inlet, between the second return path and the first inlet or between the second return path and the second inlet if the valve element is in the respectively associated relative position with respect to the valve body. In order to do so, the circumferential length of the third recess may be at least as long as the minimum circumferential distance between the return path and the inlet to be fluidically connected. The circumferential length of the third recess is to be understood as a maximum extension of the third recess on a circumference of the singular valve element. The extension of the third recess is measured as a length of a circular arc portion that extends on said circumference and whose middle axis is identical to the rotational axis of the singular valve element. The circumferential distance between a return path and an inlet is measured as a length of a circular arc portion that connects the respective return path and the respective inlet. The minimum circumferential distance between a return path and an inlet is the closest distance on said arc connecting portions of the respective return path and the respective inlet that are closest to one another. By contrast, a maximum circumferential distance between a return path and an inlet is the furthest distance on said arc connecting portions of the respective return path and the respective inlet that are furthest from one another. In simplified words, the above specified circumferential length of the third recess makes the third recess span from the respective return path to the respective inlet, thereby establishing a fluidic connection there between if the valve element is in the associated relative position with respect to the valve body.

In an example, the singular valve element further comprises a fourth recess extending in the second layer only. A circumferential length of the fourth recess is at least as long as the minimum circumferential distance between the second return path and the first inlet. The fourth recess is to be understood as a deviation of the outer shape of the singular valve element from the inner shape of the portion of the valve body in which the singular valve element is at least partially housed. Thus, at the fourth recess, the singular valve element and the valve body may form a fourth pocket or channel between the outer surface of the singular valve element and the inner surface of the valve body. The fourth pocket or channel may serve as a connecting passage between the second return path and the first inlet if the valve element is in the associated relative position with respect to the valve body. In order to do so, the circumferential length of the fourth recess may be at least as long as the minimum circumferential distance between the second return path and the first inlet. The circumferential length of the fourth recess is to be understood as a maximum extension of the fourth recess on a circumference of the singular valve element. The extension of the fourth recess is measured as a length of a circular arc portion that extends on said circumference and whose middle axis is identical to the rotational axis of the singular valve element. The circumferential distance between the second return path and the first inlet is measured as a length of a circular arc portion that connects the second return path and the first inlet. In simplified words, the above specified circumferential length of the fourth recess makes the fourth recess span from the second return path to the first inlet, thereby establishing a fluidic connection there between if the valve element is in the associated relative position with respect to the valve body.

In an example, the singular valve element further comprises a second channel extending in the second layer only. The second channel extends between the fourth recess and an outer surface of the singular valve element. A maximum circumferential distance between an opening of the second channel on the outer surface of the singular valve element and the fourth recess and/or a minimum circumferential distance between the opening of the second channel and the fourth recess is at least one of:
- the maximum circumferential distance between the opening of the second channel and the fourth recess is at least as long as the minimum circumferential distance between the first return path and the first inlet, and the minimum circumferential distance between the opening of the second channel and the fourth recess is maximally as long as the maximum circumferential distance between the first return path and the first inlet,
- the maximum circumferential distance between the opening of the second channel and the fourth recess is at least as long as the minimum circumferential distance between the first return path and the second inlet, and the minimum circumferential distance between the opening of the second channel and the fourth recess is maximally as long as the maximum circumferential distance between the first return path and the second inlet,
- the maximum circumferential distance between the opening of the second channel and the fourth recess is at least as long as the minimum circumferential distance between the second return path and the second inlet, and the minimum circumferential distance between the opening of the second channel and the fourth recess is maximally as long as the maximum circumferential distance between the second return path and the second inlet.

The second channel may be formed as a through hole that fluidically connects the fourth recess and the outer surface of the singular valve element on the second layer. The circumferential distance between the opening of the second channel on the outer surface of the singular valve element and the fourth recess is measured as a length of a circular arc portion whose middle axis is identical to the rotational axis of the singular valve element. The minimum circumferential distance between the opening of the second channel and the fourth recess is the closest distance on said arc connecting portions of the opening of the second channel and of the fourth recess that are closest to one another. By contrast, a maximum circumferential distance between the opening of the second channel and the fourth recess is the furthest distance on said arc connecting portions of the opening of the second channel and of the fourth recess that are furthest from one another. The above-specified constraints of maximum and minimum circumferential distance between the opening of the second channel and the fourth recess ensure that the circumferential distance is neither too short nor too long in order to make the second channel and the fourth recess establish a fluidic connection between a respective return path and a respective inlet if the valve element is in the associated relative position with respect to the valve body.

In an example, the first supply path, the second supply path, the first return path, the second return path, the first outlet, the second outlet, the first inlet and the second inlet are fluidically connected to a cavity of the valve body in which the singular valve element is accommodated. This is to be understood in that the first supply path, the second supply path, the first return path, the second return path, the first outlet, the second outlet, the first inlet and the second inlet may not only lead into or branch off from the cavity in the valve body by a single opening. Instead, there may be two openings on the inner surface of the cavity that connect it to the first supply path, to the first return path, to the first outlet and/or to the first inlet. This enables the establishment of a fluidic connection between a respective supply path to a respective outlet by means of the first recess and alternatively by means of the first channel and the second recess even though a circumferential length of the first recess is different from a circumferential distance between the opening of the first channel and the second recess. This applies if the valve element is in the associated relative position with respect to the valve body. Moreover, this enables the establishment of a fluidic connection between a respective return path to a respective inlet by means of the third recess and alternatively by means of the second channel and the fourth recess even though a circumferential length of the third recess is different from a circumferential distance between the opening of the second channel and the fourth recess. This also applies if the valve element is in the associated relative position with respect to the valve body.

In a further example, the first supply path, the first return path, the first outlet and/or the first inlet may comprise more than two branches fluidically connected to the cavity of the valve body in which the singular valve element is accommodated. This provides even more flexibility in adjusting a flow characteristic of the valve assembly depending on a rotational position of the singular valve element.

In an example, the singular valve element and the cavity in the valve body may at least partially have a cylindrical shape, a spherical shape and/or a conical shape. Beyond that, the singular valve element and the cavity of the valve body may both at least partially have an arbitrary shape as long as it is rotationally symmetric with respect to the middle axis of the cavity and with respect to the rotational axis of the singular valve element, for example a shape of a typical vase or of a typical drinking glass. Rotational symmetry allows the singular valve element to be rotated even though it is fitted into the cavity of the valve body in a liquid-tight manner.

In an example, the singular valve element is symmetric with respect to a middle plane separating the first layer and the second layer and/or wherein the valve body is symmetric with respect to the middle plane. The singular valve element being symmetric with respect to a middle plane separating the first layer and the second layer may imply that also the cavity in the valve body, which accommodates the singular valve element is symmetric with respect to the middle plane. The singular valve element and the valve body being symmetric with respect to the middle plane as such have the effect that manufacturing of the singular valve element and of the valve body is facilitated. The combination of a singular valve element and of a valve body that are both symmetric with respect to the middle plane has the effect that if first liquid is branched off from the first supply path to the first component and/or to the second component, the first liquid returning via the first inlet and/or the second inlet is reliably returned to the first return path. Moreover, if second liquid is branched off from the second supply path to the first component and/or to the second component, the second liquid returning via the first inlet and/or the second inlet is reliably returned to the second return path. This causes the first liquid and the second liquid to be kept in separate circuits, i.e. the first liquid and the second liquid are not mixed regardless of a position of the singular valve element relative to the valve body, e.g. a rotational position of the singular valve element. Keeping the first liquid and the second liquid separate enables an efficient temperature control of the first component and/or of the second component due to the possibility of a high temperature difference between the first liquid and the second liquid. Moreover, such a configuration facilitates the operation of the valve assembly and renders the valve assembly compact.

According to a second aspect, there is provided a valve system comprising a first valve assembly according to the first aspect and a second valve assembly according to the first aspect. The first supply path of a first valve assembly is fluidically connected to the first supply path of a second valve assembly. The first return path of the first valve assembly is fluidically connected to the first return path of the second valve assembly. The second supply path of the first valve assembly is fluidically connected to the second supply path of the second valve assembly. The second return path of the first valve assembly is fluidically connected to the second return path of the second valve assembly. In other words, the second valve assembly is connected in series to the first valve assembly. Thus, the first valve assembly, more precisely the first supply path of the first valve assembly and the first return path of the first valve assembly, and the second valve assembly, more precisely the first supply path of the second valve assembly and the first return path of the second valve assembly, may form part of the same liquid circuit. Likewise, the first valve assembly, more precisely the second supply path of the first valve assembly and the second return path of the first valve assembly, and the second valve assembly, more precisely the second supply path of the second valve assembly and the second return path of the second valve assembly, may form part of the same liquid circuit. This means that the first valve assembly and the second valve assembly may both selectively branch off first liquid from the same first liquid circuit comprising first liquid and/or selectively branch off second liquid from the same second liquid circuit comprising second liquid. The first valve assembly may selectively branch off first liquid from the first liquid circuit to a first component and/or to a second component and may also selectively branch off second liquid from the second liquid circuit to the first component and/or to the second component. The second valve assembly may selectively branch off first liquid from the first liquid circuit to a third component and/or to a fourth component and may also selectively branch off second liquid from the second liquid circuit to the third component and/or to the fourth component. Connecting the first valve assembly and the second valve assembly in series has the effect that four different components may be provided with first liquid or second liquid independently from one another. Still, the valve system using the two valve assemblies only requires two singular valve elements, one in each valve assembly, to be moved, e.g. rotated, in order to select which component shall be provided with which kind of liquid. This keeps the valve system simple, easily actuatable and reliable even though a multitude of different permutations of liquid provision to four different components are possible.

It is understood that it is optionally possible that the valve system comprises more than two valve assemblies according to the first aspect, wherein the more than two valve assemblies are connected in series as has been explained above with reference to a first valve assembly according to the first aspect and a second valve assembly according to the first aspect.

According to a further aspect, there is provided a method for controlling a flow of a first liquid and a flow of a second liquid in a vehicle using a valve assembly according to the first aspect. The method comprises at least one of:
- branching off first liquid from the first supply path to the first component only and bypassing second liquid via the second supply path in a first operational mode,
- branching off first liquid from the first supply path to the second component only and bypassing second liquid via the second supply path in a second operational mode,
- branching off first liquid from the first supply path to the first component and to the second component and bypassing second liquid via the second supply path in a third operational mode,
- branching off second liquid from the second supply path to the first component only and bypassing first liquid via the first supply path in a fourth operational mode,
- branching off second liquid from the second supply path to the second component only and bypassing first liquid via the first supply path in a fifth operational mode,
- branching off second liquid from the second supply path to the first component and to the second component and bypassing first liquid via the first supply path in a sixth operational mode,
- branching off first liquid from the first supply path to the first component only and branching off second liquid from the second supply path to the second component only in a seventh operational mode,
- branching off first liquid from the first supply path to the second component only and branching off second liquid from the second supply path to the first component only in an eighth operational mode, and
- bypassing first liquid via the first supply path and bypassing second liquid via the second supply path in a ninth operational mode.

As has been explained before, the first liquid and the second liquid may be of a different temperature. In particular, the first liquid may be warmer than the second liquid or vice versa. Thus, one of the first liquid and the second liquid may be used for heating the first component and/or the second component and the respective other one of the first liquid and the second liquid may be used for cooling the first component and/or the second component. Still, the first liquid and the second liquid may be of the same kind of liquid, e.g. water or water-based, but separated in different liquid circuits. In case the first liquid and the second liquid are used to control a temperature of the first component and/or the second component, the first liquid and the second liquid are coolants, i.e. a first coolant and a second coolant. Branching off liquid from a supply path to a component is to be understood in that a portion of the liquid is guided to the component. Upon return of the liquid from the component, the liquid may re-enter the respective return path. This enables a cyclic reuse of the first liquid and/or of the second liquid after having discharged its heat at or after having taken up heat from the component that the liquid has been guided to. Bypassing liquid via a supply path is to be understood in that the liquid flowing in this supply path is not guided to the component which is bypassed. If not specified otherwise, bypassing liquid means bypassing both the first component and the second component. Thus, the respective liquid is entirely kept in the respective supply path without being guided to any component. This way, the first component and/or the second component may be heated, cooled or not affected at all independent from a potential heating or cooling of the respective other components.

In an example, an operational mode is selected by operating the singular valve element. In particular, operating the singular valve element may be understood as rotating the singular valve element around a rotational axis of the singular valve element. The rotational axis of the singular valve element may be identical to an axis of rotational symmetry of a portion, e.g. cavity, of a valve body, in which the singular valve element is accommodated. Thus, selecting an operational mode of the valve assembly, in other words, selecting which component shall be provided with which kind of liquid is made a simple task that may be implemented by an actuator such as an electric machine, more precisely, a servomotor, that rotates the singular valve element.

In an example, the method further comprises adjusting a flow rate of the first liquid and/or a flow rate of the second liquid to the first component and/or to the second component proportionally by adjusting a position of the singular valve element. This means that a particular operational mode, i.e. which kind of liquid is provided to which component, corresponds to a positional range, in particular to a range of an angular position, of the singular valve element with respect to the valve body. Within said range, the operational mode of the valve assembly is not changed. However, moving the singular valve element, e.g. rotating the singular valve element, from one end of the range to the other end of the range may affect a cross-sectional area of a flow-through passage for liquid at an interface between the valve body and the singular valve element. Different cross-sectional areas of the flow-through passage result in different flow rates of the first liquid and/or of the second liquid to the first component and/or to the second component. Thus, it may be said that a flow rate of the first liquid and/or of the second liquid to the first component and/or to the second component may be adjusted proportionally to the position of the singular valve element, e.g. the angular position of the singular valve element, with respect to the valve body as long as the angular position of the singular valve element remains within the range of a particular operational mode. It is noted that a proportional adjustment may involve different alternatives of proportionality, e.g. linear proportionality, proportionality to a higher order polynomial function, exponential proportionality, proportionality to a root, inverse proportionality or the like. Moreover, it is noted that the proportional adjustment may comprise a piecewise function of a plurality of said alternatives. Furthermore, it is understood that each operational mode may be provided with the same kind of proportionality, some operational modes may be provided with the same kind of proportionality or all operational modes may be provided with a different kind of proportionality. Due to this flexibility, the valve assembly and in particular the singular valve element may be designed and manufactured in a way to be in accordance with typical flow rates and flow rate adjustment ranges of the first component and/or of the second component.

It should be noted that the above examples may be combined with each other irrespective of the aspect involved. Accordingly, the method may be combined with structural features and, likewise, the valve assembly and the valve system may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle comprising a valve assembly according to the present disclosure,
- Figure 2: shows the valve assembly of Figure 1 in a perspective view, wherein a valve element and a valve body are represented transparently,
- Figure 3: shows a plan view of the valve assembly of Figure 1 in a first mode of operation, wherein the valve body is represented transparently,
- Figure 4: shows a circuit diagram of the valve assembly in the first mode of operation as illustrated in Figure 3, wherein a first component, a second component, a first liquid circuit and a second liquid circuit are connected to the valve assembly,
- Figure 5: shows a plan view of the valve assembly of Figure 1 in a second mode of operation, wherein the valve body is represented transparently,
- Figure 6: shows a circuit diagram of the valve assembly in the second mode of operation as illustrated in Figure 5, wherein a first component, a second component, a first liquid circuit and a second liquid circuit are connected to the valve assembly,
- Figure 7: shows a plan view of the valve assembly of Figure 1 in a third mode of operation, wherein the valve body is represented transparently,
- Figure 8: shows a circuit diagram of the valve assembly in the third mode of operation as illustrated in Figure 7, wherein a first component, a second component, a first liquid circuit and a second liquid circuit are connected to the valve assembly,
- Figure 9: shows a plan view of the valve assembly of Figure 1 in a fourth mode of operation, wherein the valve body is represented transparently,
- Figure 10: shows a schematic of the valve assembly in the fourth mode of operation as illustrated in Figure 9, wherein a first component, a second component, a first liquid circuit and a second liquid circuit are connected to the valve assembly,
- Figure 11: shows a plan view of the valve assembly of Figure 1 in a fifth mode of operation, wherein the valve body is represented transparently,
- Figure 12: shows a schematic of the valve assembly in the fifth mode of operation as illustrated in Figure 11, wherein a first component, a second component, a first liquid circuit and a second liquid circuit are connected to the valve assembly,
- Figure 13: shows a plan view of the valve assembly of Figure 1 in a sixth mode of operation, wherein the valve body is represented transparently,
- Figure 14: shows a schematic of the valve assembly in the sixth mode of operation as illustrated in Figure 13, wherein a first component, a second component, a first liquid circuit and a second liquid circuit are connected to the valve assembly,
- Figure 15: shows a plan view of the valve assembly of Figure 1 in a seventh mode of operation, wherein the valve body is represented transparently,
- Figure 16: shows a schematic of the valve assembly in the seventh mode of operation as illustrated in Figure 15, wherein a first component, a second component, a first liquid circuit and a second liquid circuit are connected to the valve assembly
- Figure 17: shows a plan view of the valve assembly of Figure 1 in an eighth mode of operation, wherein the valve body is represented transparently,
- Figure 18: shows a schematic of the valve assembly in the eighth mode of operation as illustrated in Figure 17, wherein a first component, a second component, a first liquid circuit and a second liquid circuit are connected to the valve assembly
- Figure 19: shows a plan view of the valve assembly of Figure 1 in a ninth mode of operation, wherein the valve body is represented transparently,
- Figure 20: shows a schematic of the valve assembly in the ninth mode of operation as illustrated in Figure 19, wherein a first component, a second component, a first liquid circuit and a second liquid circuit are connected to the valve assembly,
- Figure 21: shows a valve system according to the present disclosure comprising two valve assemblies according to the present disclosure, and
- Figure 22: shows a circuit diagram of the valve system of Figure 22 wherein a first component, a second component, a third component, a fourth component, a first liquid circuit and a second liquid circuit are connected to the valve system.

### DETAILED DESCRIPTION

The Figures are merely schematic representations and serve only to illustrate examples of the disclosure. Identical or equivalent elements are in principle provided with the same reference signs.

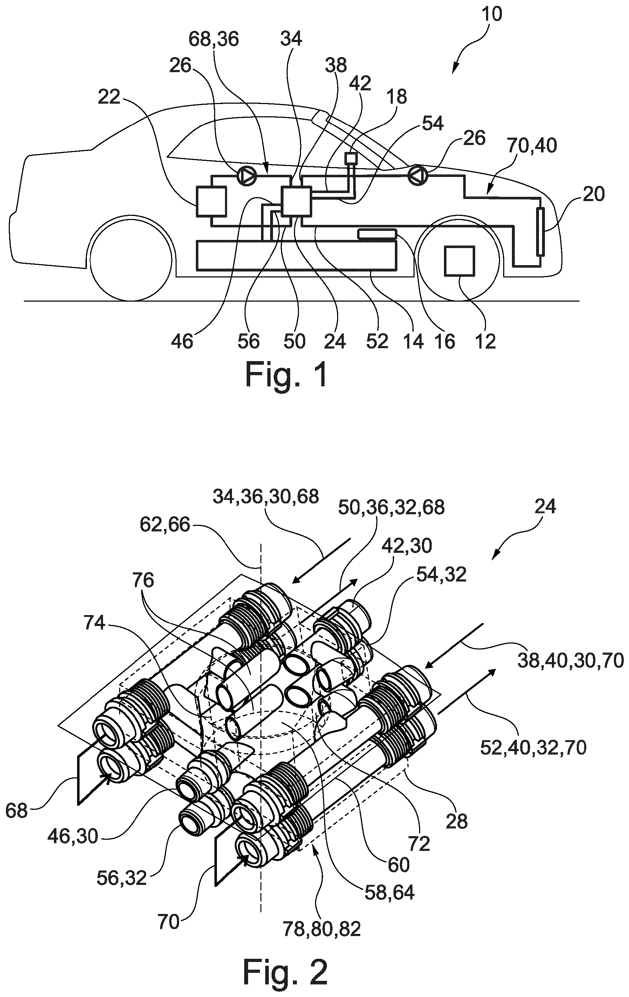

Figure 1 shows a vehicle 10.

The vehicle 10 comprises an electric machine 12 for propelling the vehicle 10.

Moreover, the vehicle 10 comprises a traction battery 14 for powering the electric machine 12.

The vehicle 10 further comprises a radiator 16.

For heating and cooling air in the interior of the passenger cabin, the vehicle 10 comprises an air conditioning unit 18.

In order to control a temperature, i.e. to cool or heat, the above-mentioned components, the vehicle 10 comprises a heat sink 20 and a heating unit 22 as a heat source. The heat sink 20 may, for example, be a further radiator and the heating unit 22 may, for example, be an electric heating unit or a heat pump system.

The vehicle 10 further comprises a valve assembly 24. The valve assembly 24 is fluidically connected to the heat sink 20 and to the heating unit 22 via respective pumps 26. Moreover, the valve assembly 22 is fluidically connected to the traction battery 14 and to the air conditioning unit 18.

Figure 2 shows a more detailed, perspective view of the valve assembly 24 of the vehicle 10.

The valve assembly 24 comprises a valve body 28. The valve body 28 is generally cuboid and has two layers 30, 32, wherein the layers 30, 32 are understood as fluidic layers.

On the first layer 30, there is arranged a first supply path 34 for a first liquid 36. In the present example, the first supply path 34 comprises an elongated channel portion which may be formed as a bore within the cuboid valve body 28. Moreover, on the first layer 20, there is arranged a second supply path 38 for second liquid 40. In the present example, the second supply path 38 comprises an elongated channel portion which may be formed as a bore within the cuboid valve body 28. Both the first supply path 34 and the second supply path 38 extend in parallel to one another and in parallel to an edge of the cuboid valve body 28. Moreover, in the present example, the first supply path 34 and the second supply path 38 are arranged at opposite ends of the first layer 30.

Additionally, a first outlet 42 for supplying liquid to a first component 44 and a second outlet 46 for supplying liquid to a second component 48 are provided on the first layer 30. Both the first outlet 42 and the second outlet 46 are formed as fluidic connection points configured for being coupled to the first component 44 and the second component 48 respectively.

On the second layer 32, there is arranged a first return path 50 for first liquid 36. In the present example, the first return path 50 comprises an elongated channel portion which may be formed as a bore within the cuboid valve body 28. Moreover, on the second layer 32, there is arranged a second return path 52 for second liquid 40. In the present example, the second return path 52 comprises an elongated channel portion which may be formed as a bore within the cuboid valve body 28. Both the first return path 50 and the second return path 52 extend in parallel to one another and in parallel to an edge of the cuboid valve body 28. Moreover, in the present example, the first return path 50 and the second return path 52 are arranged at opposite ends of the first layer 30. Additionally, the first return path 50 and the second return path 52 are arranged in parallel to the first supply path 34 and the second supply path 38.

Furthermore, a first inlet 54 for receiving liquid from the first component 44 and a second inlet 56 for receiving liquid from the second component 48 are provided on the second layer 32. Both the first inlet 54 and the second inlet 56 are formed as fluidic connection points configured for being coupled to the first component 44 and the second component 48 respectively.

In the present example, the first component 44 is the air conditioning unit 18 and the second component 48 is the traction battery 14. However, it is understood that in other examples, the first component 44 and/or the second component 48 may be a different component.

Moreover, in the present example, the first liquid 36 and the second liquid 40 are water-based coolants.

The valve body 28 further comprises a cavity 58.

In the present example, the cavity 58 has a circular cross section with a middle axis that extends substantially perpendicularly to the extension of the first supply path 34, the second supply path 38, the first return path 50 and the second return path 52.

The cavity 58 spans across the first layer 30 and the second layer 32.

The shape of the cavity 58 is symmetric with respect to a middle plane 60 between the first layer 30 and the second layer 32. In conceivable alternatives, the cavity 58 may also be of a spherical shape, of a conical shape or of other shapes that are rotationally symmetric around a middle axis 62 of the cavity 58.

On their respective layer 30, 32, the first supply path 34, the first return path 50, the second supply path 38, the second return path 52 are fluidically connected to the cavity 58, more precisely, to an inner surface of the cavity 58. To this end, each of the first supply path 34, the first return path 50, the second supply path 38, the second return path 52 may comprise one or more branch lines fluidically coupling the relevant elongated channel portion with the inner surface of the cavity 58. The branch lines may be formed as cylindrical bores extending substantially perpendicularly with respect to the associated elongated channel portion. It is noted that the respective one or more branch lines form part of the associated first supply path 34, the associated first return path 50, the associated second supply path 38 or the associated second return path 52.

Moreover, the first outlet 42, the first inlet 54, the second outlet 46 and the second inlet 56 are fluidically connected to the cavity 58, more precisely, to an inner surface of the cavity 58. These fluidic connections are also realized by one or more fluidic connection lines.

Inside the cavity 58, a singular valve element 64 is arranged. The singular valve element 64 spans across the first layer 30 and the second layer 32.

An outer surface of the singular valve element 64 comprises the same shape as the cavity 58. In the present example, the singular valve element 64 is of a circular-cylindrical shape. The shape of the singular valve element is symmetric with respect to the middle plane 60 between the first layer 30 and the second layer 32. In conceivable alternatives, the singular valve element 64 may also be of a spherical shape, of a conical shape or of other shapes that are rotationally symmetric around a rotational axis 66 of the singular valve element 64.

The rotational axis 66 of the singular valve element 64 is identical to the middle axis 62 of the cavity 58. Thus, it may be said that the singular valve element 64 is fitted into the cavity 58 of the valve body 28. In particular, the singular valve element 64 is fitted in a liquid-tight manner into the cavity 58 of the valve body 28.

When the valve assembly 24 is in use, the first supply path 34 and the first return path 50 form part of a first liquid circuit 68 that is filled with the first liquid 36.

The second supply path 38 and the second return path 52 form part of a second liquid circuit 70 that is filled with the second liquid 40.

For branching off first liquid 36 from the first liquid circuit 68 and/or for branching off second liquid 40 from the second liquid circuit 70, the singular valve element 64 comprises a first recess 72, a second recess 74 and a first channel 76.

The first recess 72, the second recess 74 and the first channel 76 only extend in the first layer 30.

Since the singular valve element 64 is symmetric with respect to the middle plane 60 between the first layer 30 and the second layer 32, the singular valve element 64 also comprises a third recess 78, a fourth recess 80 and a second channel 82 that extend in the second layer 32 only. Hence, there is no fluidic connection within the valve assembly 24 that connects the first layer 30 and the second layer 32.

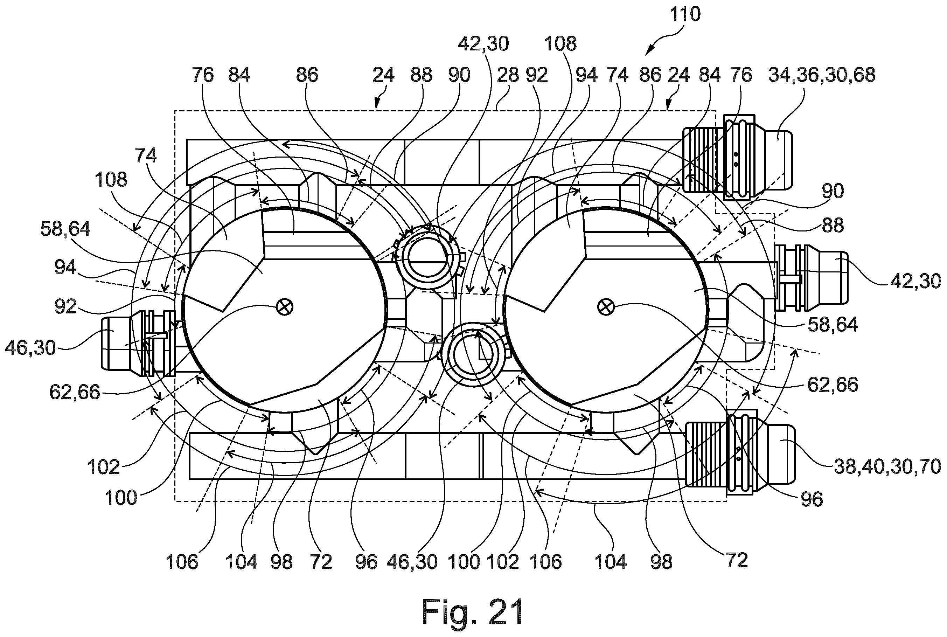

The valve assembly 24 may be operated according to a method for controlling a flow of a first liquid 36 and a flow of a second liquid 40 in a vehicle 10. Steps of the method are schematically illustrated in Figure 21.

As has been mentioned before, first liquid 36 circulates in the first liquid circuit 68, i.e. through the first supply path 34 and the first return path 50. Moreover, second liquid circulates through the second liquid circuit 70, i.e. through the second supply path 38 and the second return path 52.

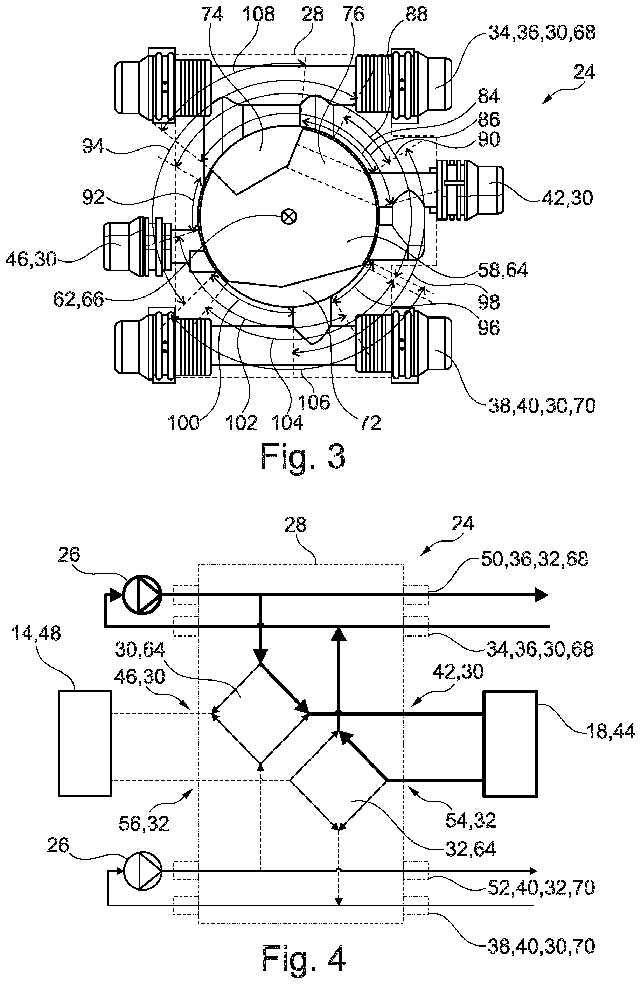

The alternative steps S1 to S9 of the method will be explained in the following with respect to Figures 3 to 20. Each of the steps S1 to S9 may be associated with an operational mode of the valve assembly 24.

Figure 3 shows a detailed plan view of the valve assembly 24 in a first operational mode.

The first operational mode corresponds to step S1 of the method, which comprises branching off first liquid 36 from the first supply path 34 to the first component 44 only and bypassing second liquid 40 via the second supply path 38.

In order to realize this functionality, the singular valve element 64 is rotated into a rotational position relative to the valve body 28 in which a fluidic connection passage between the first supply path 34 and the first outlet 42 is established by the second recess 74 and the first channel 76.

In Figure 3, a minimum circumferential distance between an opening of the first channel 76 on the outer surface of the singular valve element 64 and the second recess 74 is indicated by reference sign 84. A maximum circumferential distance between the opening of the first channel 76 on the outer surface of the singular valve element 64 and the second recess 74 is indicated by reference sign 86. A minimum circumferential distance between the first supply path 34 and the first outlet 42 is indicated by reference sign 88. A maximum circumferential distance between the first supply path 34 and the first outlet 42 is indicated by reference sign 90. A minimum circumferential distance between the first supply path 34 and the second outlet 46 is indicated by reference sign 92. A maximum circumferential distance between the first supply path 34 and the second outlet 46 is indicated by reference sign 94.

A minimum circumferential distance between the second supply path 38 and the first outlet 42 is indicated by reference sign 96. A maximum circumferential distance between the second supply path 38 and the first outlet 42 is indicated by reference sign 98. A minimum circumferential distance between the second supply path 38 and the second outlet 46 is indicated by reference sign 100. A maximum circumferential distance between the second supply path 38 and the second outlet 46 is indicated by reference sign 102.

The respective circumferential distances 84, 86, 88, 90, 92, 94, 96, 98, 100, 102 are measured along the inner surface of the cavity 58 of the valve body 28 The circumferential distances 84, 86, 88, 90, 92, 94, 96, 98, 100, 102 may also be referred to as angular distances.

Note that the first supply path 34 and the first outlet 42 each comprise two branch lines that are connected to the cavity 58 of the valve body 28. Therefore, for the minimum circumferential distance 88 between the first supply path 34 and the first outlet 42, the two neighboring branches of the first supply path 34 and of the first outlet 42 are decisive. For the maximum circumferential distance 90 between the first supply path 34 and the first outlet 42, the two branches of the first supply path 34 and of the first outlet 42 that are furthest from each other are decisive.

In order to have a fluidic connection passage formed between the first supply path 34 and the first outlet 42, the maximum circumferential distance 86 between the opening of the first channel 76 and the second recess 74 is at least as long as the minimum circumferential distance 88 between the first supply path 34 and the first outlet 42. At the same time, the minimum circumferential distance 84 between the opening of the first channel 76 and the second recess 74 is maximally as long as the maximum circumferential distance 90 between the first supply path 34 and the first outlet 42.

Still at the same time, a circumferential length 104 of the first recess 72 is inferior to a minimum circumferential distance 106 between the first outlet 42 and the second outlet 46. Due to this, second liquid 40 in the second liquid circuit 70 is bypassed, i.e. not provided to any of the first component 44 or the second component 48. Like circumferential distances 84, 86, 88, 90, 92, 94, 96, 98, 100, 102, 106, a circumferential length 104 is measured along the inner surface of the cavity 58 of the valve body 28.

In the present example, it is assumed that the first liquid circuit 68 provides the first liquid 36 and the second liquid circuit 70 provides the second liquid 40. Moreover, in the present example, the first liquid 36 may be warmer than the second liquid 40. Thus, in the present first operational mode of the valve assembly 24, comparatively warm liquid is provided to the air conditioning unit 18 of the vehicle in order to be able to heat the air in the interior of the passenger cabin of the vehicle 10. In the first operational mode, no cooling effect is provided to any component of the vehicle 10.

Since the singular valve element 64 is symmetric with respect to the middle plane 60 between the first layer 30 and the second layer 32, a connection passage between the first inlet 54 and the first return path 50 is created on the second layer 32 via the fourth recess 80 and the second channel 82.

This way, first liquid 36 that has cooled down in the air conditioning unit 18 may be recirculated into the heating unit 22 of the vehicle 10 in order to heat it up again and reuse it in the first supply path 34 (see Figure 4).

In an optional step S10 of the method, the flow rate of first liquid 36 that is provided to the first component 44 is adjusted by rotating the singular valve element 64 with respect to the valve body 28 such that the fluidic connection between the first supply path 34 and the first outlet 42 and the fluidic connection between the first inlet 54 and the first return path 50 is maintained while no fluidic connection is created between the second supply path 38 and the first outlet 42 or the second outlet 46. However, a cross section of the fluidic connection is adjusted, thereby adjusting the flow rate.

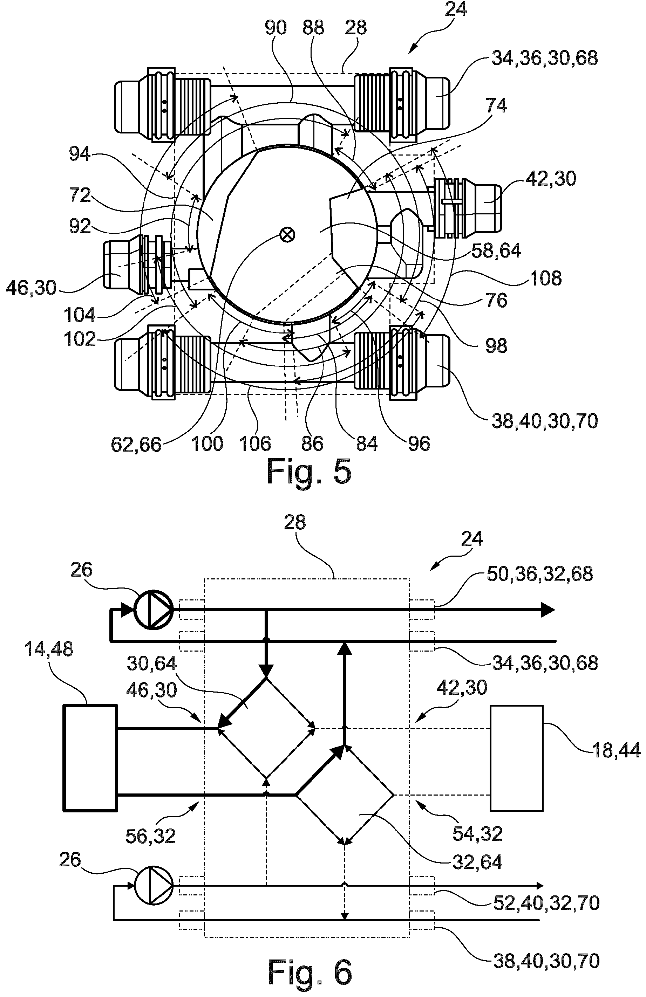

Figure 5 shows a detailed plan view of the valve assembly 24 in a second operational mode. Only the differences and additional features with respect to the first operational mode will be explained in the following.

The second operational mode corresponds to step S2 of the method, which comprises branching off first liquid 36 from the first supply path 34 to the second component 48 only and bypassing second liquid 40 via the second supply path 38.

In order to realize this functionality, the singular valve element 64 is rotated into a rotational position relative to the valve body 28 in which a fluidic connection passage between the first supply path 34 and the second outlet 46 is established by the first recess 72.

In Figure 5, a minimum circumferential distance between the first supply path 34 and the second outlet 46 is indicated by reference sign 92. The circumferential length 104 of the first recess 72 is greater than the minimum circumferential distance 92 between the first supply path 34 and the second outlet 46.

In the present second operational mode of the valve assembly 24, comparatively warm first liquid 36 is provided to the traction battery 14 of the vehicle 10. In the second operational mode, no second liquid 40 is provided to any component of the vehicle 10.

Since the singular valve element 64 is symmetric with respect to the middle plane 60 between the first layer 30 and the second layer 32, a connection passage between the second inlet 56 and the first return path 50 is created on the second layer 32 via the third recess 78.

This way, first liquid 36 that has cooled down in the traction battery 14 may be recirculated into the heating unit 22 of the vehicle 10 in order to heat it up again and reuse it in the first supply path 34 (see Figure 6).

In optional step S10 of the method, the flow rate of first liquid 36 that is provided to the second component 48 is adjusted by rotating the singular valve element 64 with respect to the valve body 28 such that the fluidic connection between the first supply path 34 and the second outlet 46 and the fluidic connection between the second inlet 56 and the first return path 50 is maintained while no fluidic connection is created between the second supply path 38 and the first outlet 42 or the second outlet 46. However, a cross section of the fluidic connection is adjusted, thereby adjusting the flow rate.

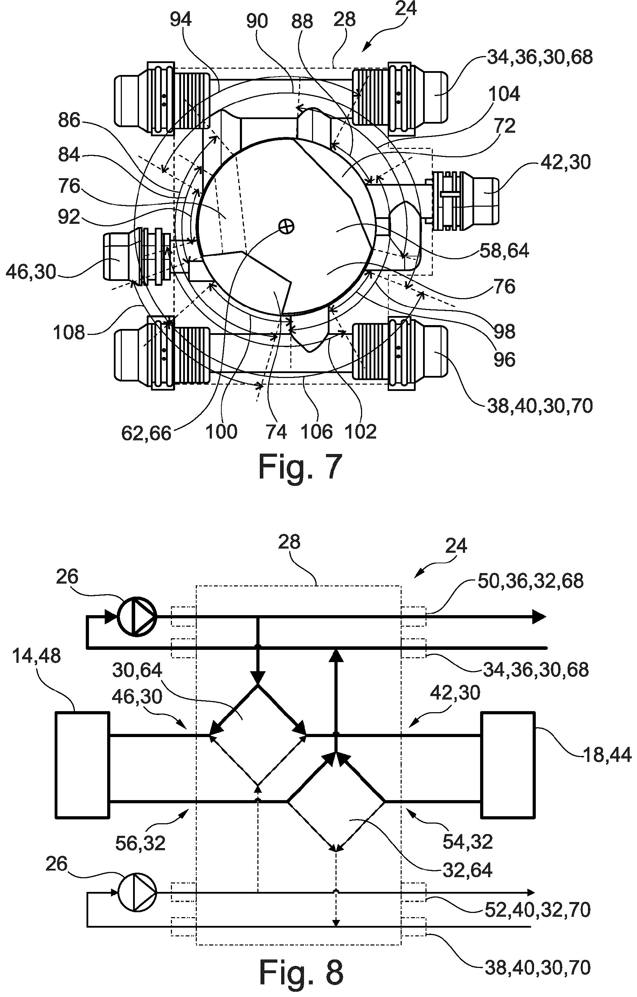

Figure 7 shows a detailed plan view of the valve assembly 24 in a third operational mode. Only the differences and additional features with respect to the first and second operational mode will be explained in the following.

The third operational mode corresponds to step S3 of the method, which comprises branching off first liquid 36 from the first supply path 34 to the first component 44 and to the second component 48 and bypassing second liquid 40 via the second supply path 38.

In order to realize this functionality, the singular valve element 64 is rotated into a rotational position relative to the valve body 28 in which a fluidic connection passage between the first supply path 34 and the first outlet 42 is established by the first recess 72. A further fluidic connection passage is established between the first supply path 34 and the second outlet 46 by the second recess 74 and the first channel 76.

In Figure 7, the circumferential length 104 of the first recess 72 is greater than a minimum circumferential distance 88 between the first supply path 32 and the first outlet 42. This creates a fluidic connection passage between the first supply path 32 and the first outlet 42.

In order to form a fluidic connection passage between the first supply path 32 and the second outlet 46, the maximum circumferential distance 86 between the opening of the first channel 76 and the second recess 74 is at least as long as the minimum circumferential distance 92 between the first supply path 34 and the second outlet 46. At the same time, the minimum circumferential distance 84 between the opening of the first channel 76 and the second recess 74 is maximally as long as the maximum circumferential distance 94 between the first supply path 34 and the second outlet 46.

In the present third operational mode of the valve assembly 24, comparatively warm first liquid 36 is provided to both the air conditioning unit 18 and to the traction battery 14 of the vehicle 10. In the third operational mode, no second liquid 40 is provided to any component of the vehicle 10.

Since the singular valve element 64 is symmetric with respect to the middle plane 60 between the first layer 30 and the second layer 32, a connection passage between the first inlet 54 and the first return path 50 is created on the second layer 32 via the third recess 78. A connection passage between the second inlet 56 and the first return path 50 is created on the second layer 32 via the fourth recess 80 and the second channel 82.

This way, first liquid 36 that has cooled down in the air conditioning unit 18 and in the traction battery 14 may be recirculated to the heating unit 22 of the vehicle 10 in order to heat it up again and reuse it in the first supply path 34 (see Figure 8).

In optional step S10 of the method, the flow rate of first liquid 36 that is provided to the first component 44 and to the second component 48 is adjusted by rotating the singular valve element 64 with respect to the valve body 28 such that the fluidic connection between the first supply path 34 and the first outlet 42 as well as between the first supply path 34 and the second outlet 46 is maintained while no fluidic connection is created between the second supply path 38 and the first outlet 42 or the second outlet 46. However, a cross section of the fluidic connection is adjusted, thereby adjusting the flow rate.

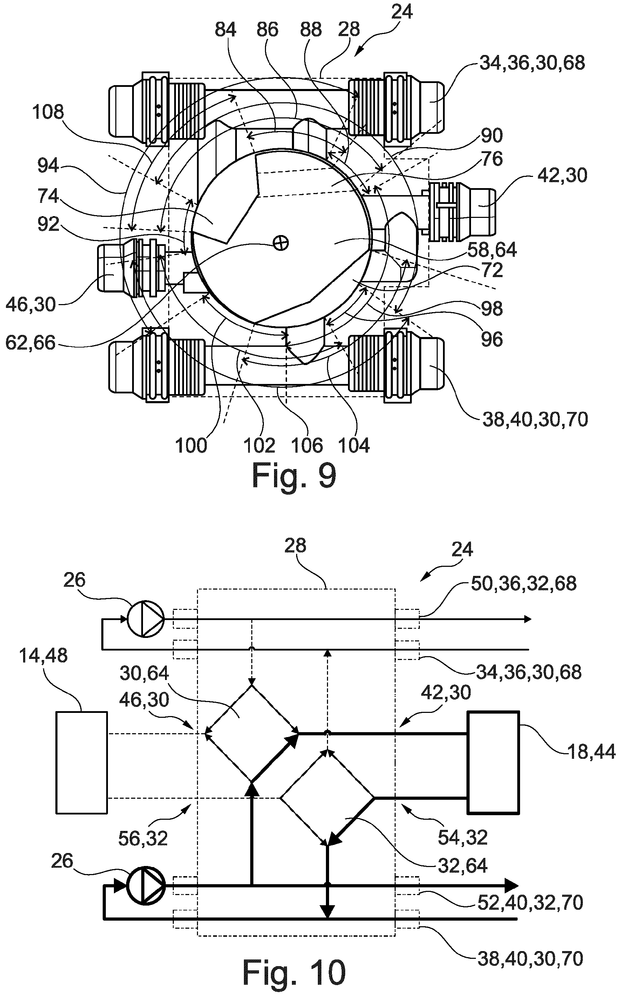

Figure 9 shows a detailed plan view of the valve assembly 24 in a fourth operational mode. Only the differences and additional features with respect to the first, second and third operational mode will be explained in the following.

The fourth operational mode corresponds to step S4 of the method, which comprises branching off second liquid 40 from the second supply path 38 to the first component 44 only and bypassing first liquid 36 via the first supply path 34.

In order to realize this functionality, the singular valve element 64 is rotated into a rotational position relative to the valve body 28 in which a fluidic connection passage between the second supply path 38 and the first outlet 42 is established by the first recess 72.

In Figure 9, the circumferential length 104 of the first recess 72 is greater than a minimum circumferential distance 96 between the second supply path 38 and the first outlet 42. This creates a fluidic connection passage between the second supply path 38 and the first outlet 42.

In the present fourth operational mode of the valve assembly 24, comparatively cool second liquid 40 is provided to the air conditioning unit 18 of the vehicle 10. In the fourth operational mode, no first liquid 36 is provided to any component of the vehicle 10.

Since the singular valve element 64 is symmetric with respect to the middle plane 60 between the first layer 30 and the second layer 32, a connection passage between the first inlet 54 and the second return path 52 is created on the second layer 32 via the third recess 78.

This way, second liquid 40 that has heated up in the air conditioning unit 18 may be recirculated to the heat sink 20 of the vehicle in order to cool it down again and reuse it in the second supply path 38 (see Figure 10).

In optional step S10 of the method, the flow rate of second liquid 40 that is provided to the first component 44 and to the second component 48 is adjusted by rotating the singular valve element 64 with respect to the valve body 28 such that the fluidic connection between the second supply path 38 and the first outlet 42 is maintained while no fluidic connection is created between the first supply path 34 and the first outlet 42 or the second outlet 46. However, a cross section of the fluidic connection is adjusted, thereby adjusting the flow rate.

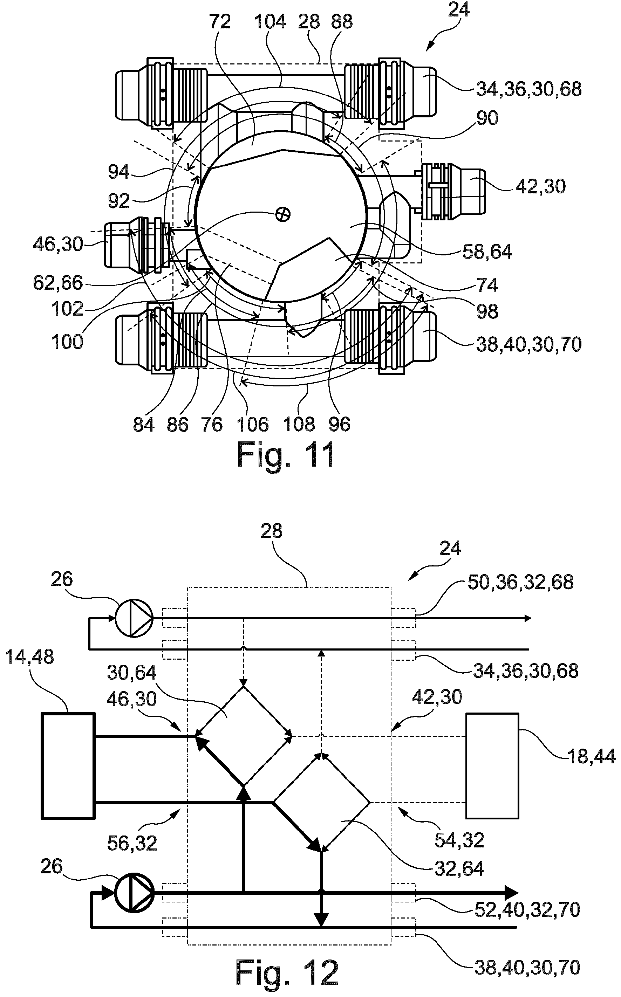

Figure 11 shows a detailed plan view of the valve assembly 64 in a fifth operational mode. Only the differences and additional features with respect to the first, second, third and fourth operational mode will be explained in the following.

The fifth operational mode corresponds to step S5 of the method, which comprises branching off second liquid 40 from the second supply path 38 to the second component 48 only and bypassing first liquid 36 via the first supply path 34.

In order to realize this functionality, the singular valve element 64 is rotated into a rotational position relative to the valve body 28 in which a fluidic connection passage between the second supply path 38 and the second outlet 46 is established by the second recess 74 and the first channel 76.

In Figure 11, the maximum circumferential distance 86 between the opening of the first channel 76 and the second recess 74 is at least as long as the minimum circumferential distance 100 between the second supply path 38 and the second outlet 46. At the same time, the minimum circumferential distance 84 between the opening of the first channel 76 and the second recess 74 is maximally as long as the maximum circumferential distance 102 between the second supply path 38 and the second outlet 46. This creates a fluidic connection passage between the second supply path 38 and the second outlet 46.

Still at the same time, the circumferential length 104 of the first recess 72 is inferior to the minimum circumferential distance 106 between the first outlet 42 and the second outlet 46.

In the present fifth operational mode of the valve assembly, second liquid 40 is provided to the traction battery 14 of the vehicle 10. In the fifth operational mode, no first liquid 36 is provided to any component of the vehicle 10.

Since the singular valve element 64 is symmetric with respect to the middle plane 60 between the first layer 30 and the second layer 32, a connection passage between the second inlet 56 and the second return path 52 is created on the second layer 32 via the fourth recess 80 and the second channel 82.

This way, second liquid 40 that has heated up in the traction battery 14 may be recirculated to the heat sink 20 of the vehicle 10 in order to cool down it again and reuse it in the second supply path 38 (see Figure 12).

In optional step S10 of the method, the flow rate of second liquid 40 that is provided to the second component 48 is adjusted by rotating the singular valve element 64 with respect to the valve body 28 such that the fluidic connection between the second supply path 38 and the second outlet 46 is maintained while no fluidic connection is created between the first supply path 34 and the first outlet 42 or the second outlet 46. However, a cross section of the fluidic connection is adjusted, thereby adjusting the flow rate.

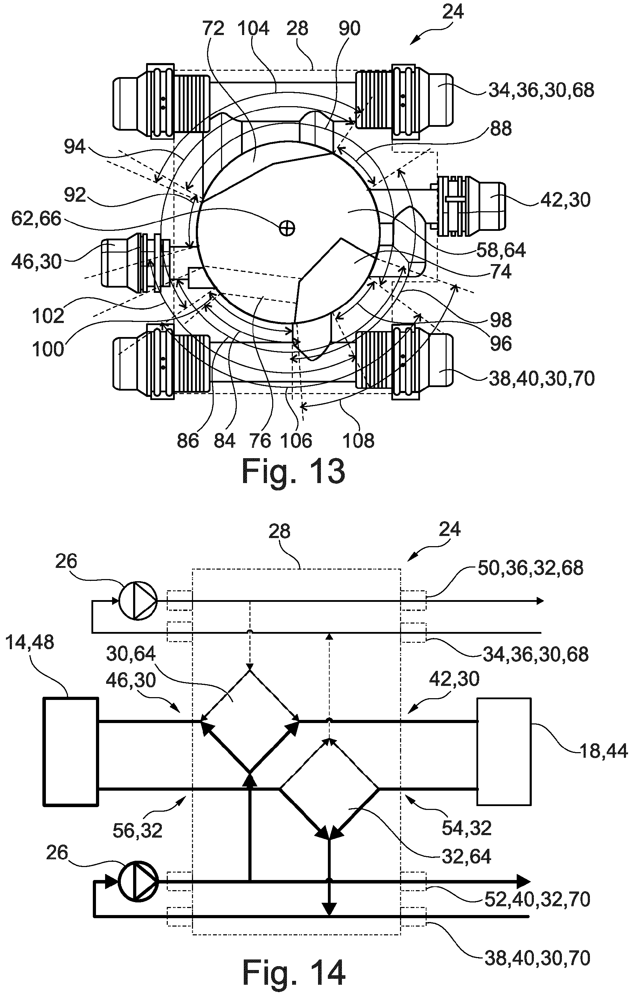

Figure 13 shows a detailed plan view of the valve assembly 24 in a sixth operational mode. Only the differences and additional features with respect to the first, second, third, fourth and fifth operational mode will be explained in the following.

The sixth operational mode corresponds to step S6 of the method, which comprises branching off second liquid 40 from the second supply path 38 to the first component 44 and to the second component 48 and bypassing first liquid 36 via the first supply path 34.

In order to realize this functionality, the singular valve element 64 is rotated into a rotational position relative to the valve body 28 in which a fluidic connection passage between the second supply path 38 and the first outlet 42 is established by the second recess 74 and in which a fluidic connection passage between the second supply path 38 and the second outlet 46 is established by the second recess 74 and the first channel 76.

In Figure 13, a circumferential length 108 of the second recess 74 is at least as long as the minimum circumferential distance 96 between the second supply path 38 and the first outlet 42. This creates a fluidic connection passage between the second supply path 38 and the first outlet 42.

The maximum circumferential distance 86 between the opening of the first channel 76 and the second recess 74 is at least as long as the minimum circumferential distance 100 between the second supply path 38 and the second outlet 46. At the same time, the minimum circumferential distance 84 between the opening of the first channel 76 and the second recess 74 is maximally as long as the maximum circumferential distance 102 between the second supply path 38 and the second outlet 46. This creates a fluidic connection passage between the second supply path 38 and the second outlet 46.

Still at the same time, the circumferential length 104 of the first recess 72 is inferior to the minimum circumferential distance 106 between the first outlet 42 and the second outlet 46.

In the present sixth operational mode of the valve assembly, comparatively cool second liquid 40 is provided to both the air conditioning unit 18 and to traction battery 14 of the vehicle 10. In the sixth operational mode, no first liquid 36 is provided to any component of the vehicle 10.

Since the singular valve element 64 is symmetric with respect to the middle plane 60 between the first layer 30 and the second layer 32, a connection passage between the first inlet 54 and the second return path 52 is created on the second layer 32 by the fourth recess 80. Also, a connection passage between the second inlet 56 and the second return path 52 is created on the second layer 32 by the fourth recess 80 and the second channel 82.

This way, second liquid 40 that has heated up in the air conditioning unit 18 and in the traction battery 14 may be recirculated to the heat sink 20 of the vehicle in order to cool it down again and reuse it in the second supply path 38 (see Figure 14).

In optional step S10 of the method, the flow rate of second liquid 40 that is provided to the first component 44 and to the second component 48 is adjusted by rotating the singular valve element 64 with respect to the valve body 28 such that the fluidic connection between the second supply path 38 and the first outlet 42 as well as between the second supply path 38 and the second outlet 46 is maintained while no fluidic connection is created between the first supply path 34 and the first outlet 42 or the second outlet 46. However, a cross section of the fluidic connection is adjusted, thereby adjusting the flow rate.

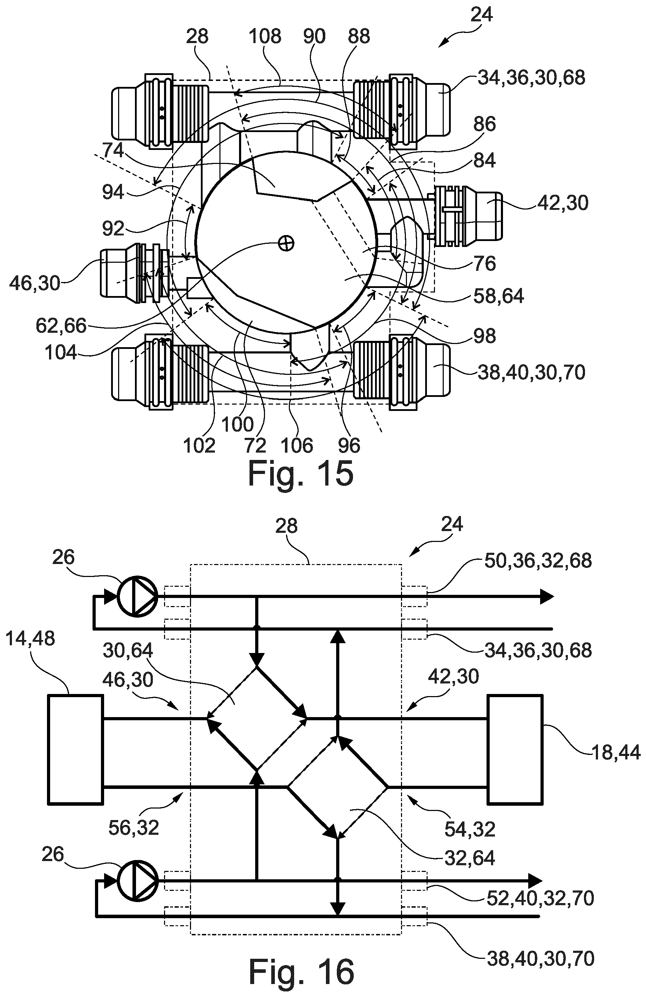

Figure 15 shows a detailed plan view of the valve assembly 24 in a seventh operational mode. Only the differences and additional features with respect to the first, second, third, fourth, fifth and sixth operational mode will be explained in the following.

The seventh operational mode corresponds to step S7 of the method, which comprises branching off first liquid 36 from the first supply path 34 to the first component 44 only and branching off second liquid 40 from the second supply path 38 to the second component 48 only.

In order to realize this functionality, the singular valve element 64 is rotated into a rotational position relative to the valve body 28 in which a fluidic connection passage between the first supply path 34 and the first outlet 42 is established by the second recess 74 and the first channel 76. Also, a fluidic connection passage is established between the second supply path 38 and the second outlet 46 by the first recess 72.

In Figure 15, a circumferential length 104 of the first recess 72 is at least as long as a minimum circumferential distance 100 between the second supply path 38 and the second outlet 46. This creates a fluidic connection passage between the second supply path 38 and the second outlet 46.

The maximum circumferential distance 86 between the opening of the first channel 76 and the second recess 74 is at least as long as the minimum circumferential distance 88 between the first supply path 34 and the first outlet 42. At the same time, the minimum circumferential distance 84 between the opening of the first channel 76 and the second recess 74 is maximally as long as the maximum circumferential distance 90 between the first supply path 34 and the first outlet 42. This creates a fluidic connection passage between the first supply path 34 and the first outlet 42.

In the present seventh operational mode of the valve assembly 24, comparatively warm first liquid 36 is provided to the air conditioning unit 18 and comparatively cool second liquid 40 is provided to the traction battery 14 of the vehicle 10.

Since the singular valve element 64 is symmetric with respect to the middle plane 60 between the first layer 30 and the second layer 32, a connection passage between the first inlet 54 and the first return path 50 is created on the second layer 32 by the fourth recess 80 and the second channel 82. Also, a connection passage between the second inlet 56 and the second return path 52 is created on the second layer 32 by the third recess 78.

This way, first liquid 36 that has cooled down in the air conditioning unit 18 may be recirculated to the heating unit 22 of the vehicle 10 in order to heat it up again and reuse it in the first supply path 34. Also, second liquid 40 that has heated up in the traction battery 14 may be recirculated to the heat sink 20 of the vehicle 10 in order to cool it down again and reuse it in the second supply path 38 (see Figure 16).

In optional step S10 of the method, the flow rate of first liquid 36 that is provided to the first component 44 and the flow rate of the second liquid 40 that is provided to the second component 48 is adjusted by rotating the singular valve element 64 with respect to the valve body 28 such that the fluidic connection between the first supply path 34 and the first outlet 42 as well as between the second supply path 38 and the second outlet 46 is maintained while no fluidic connection is created between the first supply path 34 and the second outlet 46 or between the second supply path 38 and the first outlet 42. However, a cross section of the fluidic connection is adjusted, thereby adjusting the flow rate.

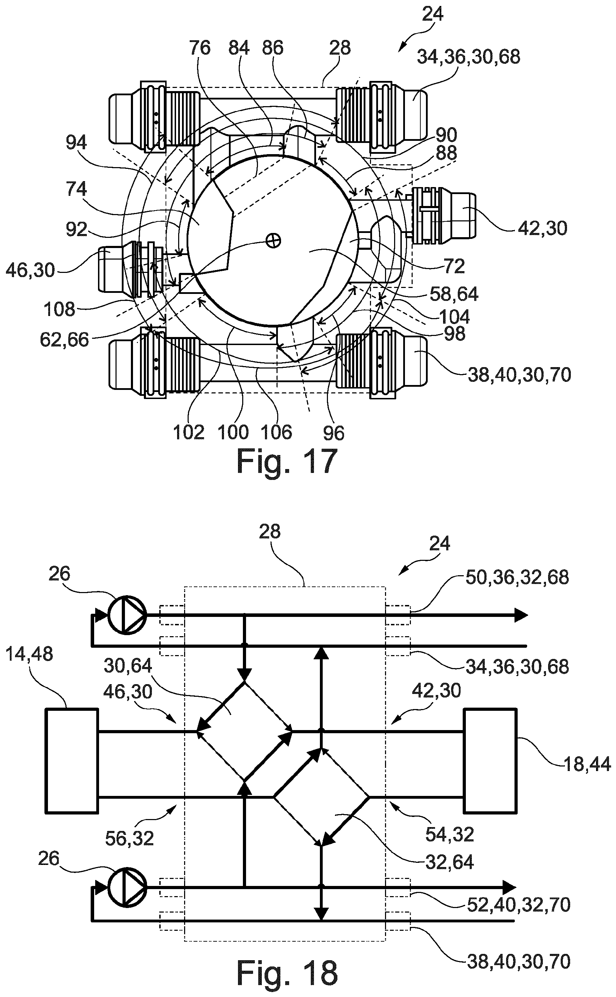

Figure 17 shows a detailed plan view of the valve assembly 24 in an eighth operational mode. Only the differences and additional features with respect to the first, second, third, fourth, fifth, sixth and seventh operational mode will be explained in the following.

The eighth operational mode corresponds to step S8 of the method, which comprises branching off first liquid 36 from the first supply path 34 to the second component 48 only and branching off second liquid 40 from the second supply path 38 to the first component 44 only.

In order to realize this functionality, the singular valve element 64 is rotated into a rotational position relative to the valve body 28 in which a fluidic connection passage between the first supply path 34 and the second outlet 46 is established by the second recess 74 and the first channel 76. Also, a fluidic connection passage is established between the second supply path 38 and the first outlet 42 by the first recess 72.

In Figure 17, a circumferential length 104 of the first recess 72 is at least as long as a minimum circumferential distance 96 between the second supply path 38 and the first outlet 42. This creates a fluidic connection passage between the second supply path 38 and the first outlet 42.

The maximum circumferential distance 86 between the opening of the first channel 76 and the second recess 74 is at least as long as the minimum circumferential distance 92 between the first supply path 34 and the second outlet 46. The minimum circumferential distance 84 between the opening of the first channel 76 and the second recess 74 is maximally as long as the maximum circumferential distance 94 between the first supply path 34 and the second outlet 46. This creates a fluidic connection passage between the first supply path 34 and the second outlet 46.

In the present eighth operational mode of the valve assembly, comparatively cool second liquid 40 is provided to the air conditioning unit 18 and comparatively warm first liquid 36 is provided to the traction battery 14 of the vehicle 10.

Since the singular valve element 64 is symmetric with respect to the middle plane 60 between the first layer 30 and the second layer 32, a connection passage between the first inlet 54 and the second return path 52 is created on the second layer 32 by the third recess 78. Also, a connection passage between the second inlet 56 and the first return path 50 is created on the second layer 32 by the fourth recess 80 and the second channel 82.

This way, first liquid 36 that has cooled down in the traction battery 14 may be recirculated to the heating unit 22 of the vehicle 10 in order to heat it up again and reuse it in the first supply path 34. Also, second liquid 40 that has heated up in the air conditioning unit 18 may be recirculated to the heat sink 20 of the vehicle 10 in order to cool it down again and reuse it in the second supply path 38 (see Figure 18).

In optional step S10 of the method, the flow rate of first liquid 36 that is provided to the second component 48 and the flow rate of the second liquid 40 that is provided to the first component 44 is adjusted by rotating the singular valve element 64 with respect to the valve body 28 such that the fluidic connection between the first supply path 34 and the second outlet 46 as well as between the second supply path 38 and the first outlet 42 is maintained while no fluidic connection is created between the first supply path 34 and the first outlet 42 or between the second supply path 38 and the second outlet 46. However, a cross section of the fluidic connection is adjusted, thereby adjusting the flow rate.

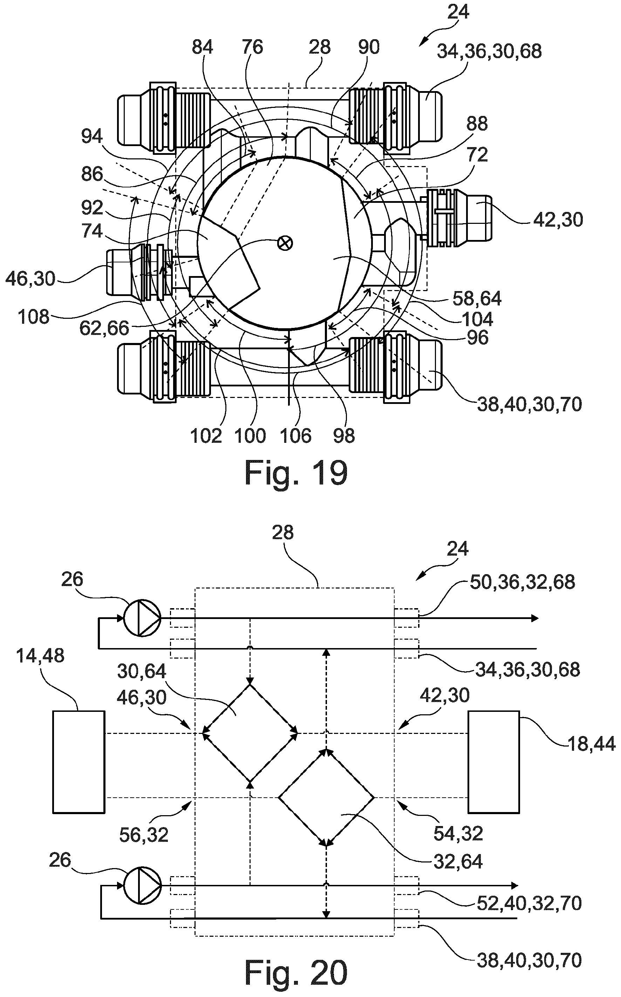

Figure 19 shows a detailed plan view of the valve assembly 24 in a ninth operational mode. Only the differences and additional features with respect to the first, second, third, fourth, fifth, sixth, seventh and eighth operational mode will be explained in the following.

The ninth operational mode corresponds to step S9 of the method, which comprises bypassing first liquid 36 via the first supply path 34 and bypassing second liquid 40 via the second supply path 38.

In order to realize this functionality, the singular valve element 64 is rotated into a rotational position relative to the valve body 28 in which no fluidic connection passage between any supply path 34, 38 and any outlet 42, 46 is established.

In Figure 19, a circumferential length 104 of the first recess 72 is inferior to a minimum circumferential distance 106 between the first outlet 42 and the second outlet 46.

In the present ninth operational mode of the valve assembly 24, first liquid 36 is passed by (not passed through) the singular valve element 64. Thus, first liquid is neither guided to the first component 44 nor to the second component 48. Also, second liquid 40 is passed by (not passed through) the singular valve element 64. Thus, second liquid 40 is neither guided to the first component 44 nor to the second component 48.

Since the singular valve element 64 is symmetric with respect to the middle plane 60 between the first layer 30 and the second layer 32, also a connection passage between the first inlet 54 and any return path 50, 52 as well as a connection passage between the second inlet 56 and any return path 50, 52 is blocked.

This way, no first liquid 36 or second liquid 40 is guided to any of the first component 44 and second component 48. Instead, both the first liquid 36 and the second liquid 40 circulate in the first liquid circuit 68 and in the second liquid circuit 70, respectively. No liquid 36, 40 is branched off from these liquid circuits 68, 70 (see Figure 20).

The optional step S10 of the method, which comprises adjusting the flow rate of first liquid 36 and/or of second liquid 40, is not carried out in in the ninth operational mode of the valve assembly 24 because it is the aim of the ninth operational mode to allow no flow rate of any liquid 36, 40 to any of the first component 44 and second component 48.

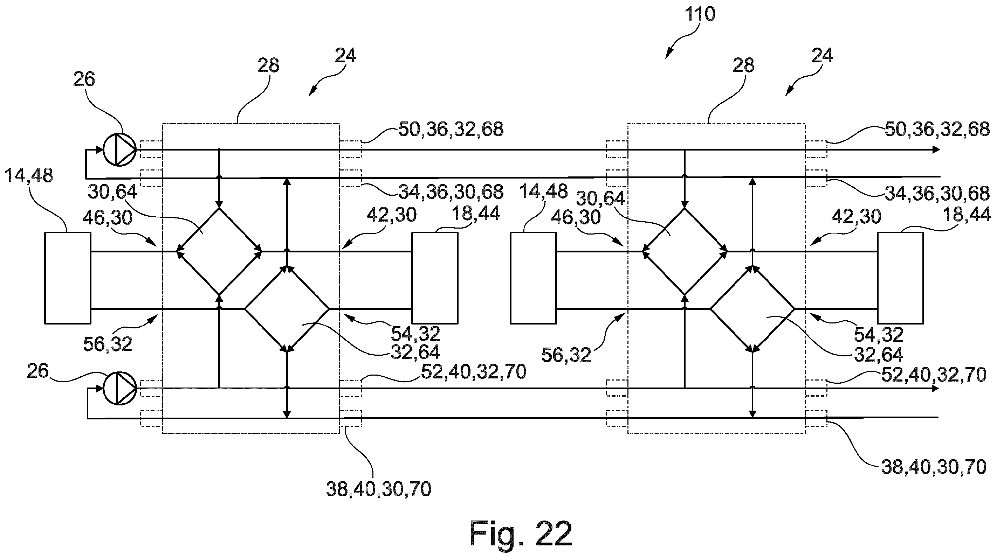

The above-explained operational modes of the valve assembly 24 related to two components 44, 48 being selectively supplied with first liquid 36 and/or second liquid 40. In the following, a valve system 110 is explained that comprises two of the above-explained valve assemblies 24 (see Figure 22).

The first supply path 34 of the first valve assembly 24 (on the right of Figure 22) is fluidically connected to the first supply path 34 of the second valve assembly 24 (on the left of Figure 22). Also, the first return path 50 of the first valve assembly 24 is fluidically connected to the first return path 50 of the second valve assembly 24. Thus, the first valve assembly 24 and the second valve assembly 24 are connected to the same first liquid circuit 68 (see Figure 23).

Moreover, the second supply path 38 of the first valve assembly 24 is fluidically connected to the second supply path 38 of the second valve assembly 24. Also, the second return path 52 of the first valve assembly 24 is fluidically connected to the second return path 52 of the second valve assembly 24. Thus, the first valve assembly 24 and the second valve assembly 24 are connected to the same second liquid circuit 70 (see also Figure 23).

To each of the first valve assembly 24 and the second valve assembly 24, two different components of the vehicle 10 may be connected.

In the present example of the valve system 110, it is referred back to Figure 1, in which also the electric machine 12 and the radiator 16 were introduced as components of the vehicle 10.

In the valve system 110, the first valve assembly 24 is connected to the air conditioning unit 18 as first component 44 and to the traction battery 14 as second component 48. The second valve assembly 24 is connected to the electric machine 12 as first component 44 and to the radiator 16 as second component 48. Hence, the valve system 110 is fluidically connected to a total of four different components.

Although the first valve assembly 24 and the second valve assembly 24 are fluidically connected to the same first liquid circuit 68 and to the same second liquid circuit 70, each valve assembly 24 may be operated to branch off any liquid 36, 40 to any of its first component 44 and second component 48 independent from the other valve assembly 24. Also, each valve assembly 24 may be operated to bypass any liquid 36, 40 by (not guide through) its singular valve element 64 independent from the other valve assembly 24.

In simplified words, both the first valve assembly 24 and the second valve assembly 24 of the valve system 110 may be operated according to the above-explained method for controlling a flow of a first liquid 36 and a flow of a second liquid 40 in a vehicle 10 independent from the respective other valve assembly 24. Thus, a total of four different components of the vehicle 10 may selectively be provided with first liquid 36 and/or second liquid 40.

In the present example of the valve system 110, the electric machine 12 and the radiator 16 of the vehicle 10 may selectively be heated, cooled or not temperature conditioned at all independent from any temperature conditioning of the air conditioning unit 18 or of the traction battery 14.

Of course, it is conceivable to connect more than two valve assemblies 24 in order to form a valve system 110. For each further valve assembly 24 that is added to the valve system 110, two further components of the vehicle 10 may selectively be cooled, heated or not temperature conditioned independent from any temperature conditioning of the other components of the vehicle 10.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: electric machine
- 14: traction battery
- 16: radiator
- 18: air conditioning unit
- 20: heat sink
- 22: heating unit
- 24: valve assembly
- 26: pump
- 28: valve body
- 30: first layer
- 32: second layer
- 34: first supply path
- 36: first liquid
- 38: second supply path
- 40: second liquid
- 42: first outlet
- 44: first component
- 46: second outlet
- 48: second component
- 50: first return path
- 52: second return path
- 54: first inlet
- 56: second inlet
- 58: cavity
- 60: middle plane
- 62: middle axis of cavity
- 64: singular valve element
- 66: rotational axis of singular valve element
- 68: first liquid circuit
- 70: second liquid circuit
- 72: first recess
- 74: second recess
- 76: first channel
- 78: third recess
- 80: fourth recess
- 82: second channel
- 84: minimum circumferential distance between opening of first channel and second recess
- 86: maximum circumferential distance between opening of first channel and second recess
- 88: minimum circumferential distance between first supply path and first outlet
- 90: maximum circumferential distance between first supply path and first outlet
- 92: minimum circumferential distance between first supply path and second outlet
- 94: maximum circumferential distance between first supply path and second outlet
- 96: minimum circumferential distance between second supply path and first outlet
- 98: maximum circumferential distance between second supply path and first outlet
- 100: minimum circumferential distance between second supply path and second outlet
- 102: maximum circumferential distance between second supply path and second outlet
- 104: circumferential length of first recess
- 106: minimum circumferential distance between first outlet and second outlet
- 108: circumferential length of second recess
- 110: valve system

## Claims

1. A valve assembly (24) for controlling a flow of a first liquid (36) and a flow of a second liquid (40) in a vehicle (10), the valve assembly (24) comprising a valve body (28) having
- a first supply path (34) for the first liquid (36),
- a first return path (50) for the first liquid (36),
- a second supply path (38) for the second liquid (40),
- a second return path (52) for the second liquid (40),
- a first outlet (42) for supplying liquid (36, 40) to a first component (44),
- a first inlet (54) for receiving liquid (36, 40) from the first component (44),
- a second outlet (46) for supplying liquid (36, 40) to a second component (48),
- a second inlet (56) for receiving liquid (36, 40) from the second component (48), and
a singular valve element (64) movably supported on or in the valve body (28) for at least
- selectively branching off first liquid (36) from the first supply path (34) to the first component (44) and returning first liquid (36) from the first component (44) into the first return path (50), or
- selectively branching off first liquid (36) form the first supply path (34) to the second component (48) and returning first liquid (36) from the second component (48) into the first return path (50), or
- selectively branching off second liquid (40) from the second supply path (38) to the first component (44) and returning second liquid (40) from the first component (44) into the second return path (52), or
- selectively branching off second liquid (40) from the second supply path (38) to the second component (48) and returning second liquid (40) from the second component (48) into the second return path (52).

2. The valve assembly (24) according to claim 1,
wherein the first supply path (34), the second supply path (38), the first outlet (42), and the second outlet (46) are arranged in a first layer (30) of the valve assembly (24), wherein the first return path (50), the second return path (52), the first inlet (54) and the second inlet (56) are arranged in a second layer (32) of the valve assembly (24), and wherein the singular valve element (64) spans over the first layer (30) and over the second layer (32).

3. The valve assembly (24) according to claim 1 or 2, wherein the singular valve element (64) comprises a first recess (72) extending in the first layer (30) only, and wherein a circumferential length (104) of the first recess (72) is at least one of:
- at least as long as a minimum circumferential distance (88) between the first supply path (34) and the first outlet (42),
- at least as long as a minimum circumferential distance (92) between the first supply path (34) and the second outlet (46),
- at least as long as a minimum circumferential distance (96) between the second supply path (38) and the first outlet (42),
- at least as long as a minimum circumferential distance (100) between the second supply path (38) and the second outlet (46).

4. The valve assembly (24) according to any of the preceding claims, wherein the singular valve element (64) further comprises a second recess (74) extending in the first layer (30) only, and
wherein a circumferential length (108) of the second recess (74) is at least as long as the minimum circumferential distance (96) between the second supply path (38) and the first outlet (42).

5. The valve assembly (24) according to claim 4, wherein the singular valve element (64) further comprises a first channel (76) extending in the first layer (30) only,
wherein the first channel (76) extends between the second recess (74) and an outer surface of the singular valve element (64),
wherein a maximum circumferential distance (86) between an opening of the first channel (76) on the outer surface of the singular valve element (64) and the second recess (74) and/or a minimum circumferential distance (84) between the opening of the first channel (76) and the second recess (74) is at least one of:
- the maximum circumferential distance (86) between the opening of the first channel (76) and the second recess (74) is at least as long as the minimum circumferential distance (88) between the first supply path (34) and the first outlet (42), and the minimum circumferential distance (84) between the opening of the first channel (76) and the second recess (74) is maximally as long as the maximum circumferential distance (90) between the first supply path (34) and the first outlet (42),
- the maximum circumferential distance (86) between the opening of the first channel (76) and the second recess (74) is at least as long as the minimum circumferential distance (92) between the first supply path (34) and the second outlet (46), and the minimum circumferential distance (84) between the opening of the first channel (76) and the second recess (74) is maximally as long as the maximum circumferential distance (94) between the first supply path (34) and the second outlet (46),
- the maximum circumferential distance (86) between the opening of the first channel (76) and the second recess (74) is at least as long as the minimum circumferential distance (100) between the second supply path (38) and the second outlet (46), and the minimum circumferential distance (84) between the opening of the first channel (76) and the second recess (74) is maximally as long as the maximum circumferential distance (102) between the second supply path (38) and the second outlet (46).

6. The valve assembly (24) according to any of the preceding claims, wherein the singular valve element (64) further comprises a third recess (78) extending in the second layer (32) only, and wherein a circumferential length of the third recess (78) is at least one of:
- at least as long as a minimum circumferential distance between the first return path (50) and the first inlet (54),
- at least as long as a minimum circumferential distance between the first return path (50) and the second inlet (56),
- at least as long as a minimum circumferential distance between the second return path (52) and the first inlet (54),
- at least as long as a minimum circumferential distance between the second return path (52) and the second inlet (56).

7. The valve assembly (24) according to any of the preceding claims, wherein the singular valve element (64) further comprises a fourth recess (80) extending in the second layer (32) only, and
wherein a circumferential length of the fourth recess (80) is at least as long as the minimum circumferential distance between the second return path (52) and the first inlet (54).

8. The valve assembly (24) according to claim 7, wherein the singular valve element (64) further comprises a second channel (82) extending in the second layer (32) only,
wherein the second channel (82) extends between the fourth recess (80) and an outer surface of the singular valve element (64),
wherein a maximum circumferential distance between an opening of the second channel (82) on the outer surface of the singular valve element (64) and the fourth recess (80) and/or a minimum circumferential distance between the opening of the second channel (82) and the fourth recess (80) is at least one of:
- the maximum circumferential distance between the opening of the second channel (82) and the fourth recess (80) is at least as long as the minimum circumferential distance between the first return path (50) and the first inlet (54), and the minimum circumferential distance between the opening of the second channel (82) and the fourth recess (80) is maximally as long as the maximum circumferential distance between the first return path (50) and the first inlet (54),
- the maximum circumferential distance between the opening of the second channel (82) and the fourth recess (80) is at least as long as the minimum circumferential distance between the first return path (50) and the second inlet (56), and the minimum circumferential distance between the opening of the second channel (82) and the fourth recess (80) is maximally as long as the maximum circumferential distance between the first return path (50) and the second inlet (56),
- the maximum circumferential distance between the opening of the second channel (82) and the fourth recess (80) is at least as long as the minimum circumferential distance between the second return path (52) and the second inlet (56), and the minimum circumferential distance between the opening of the second channel (82) and the fourth recess (80) is maximally as long as the maximum circumferential distance between the second return path (52) and the second inlet (56).

9. The valve assembly (24) according to any of the preceding claims, wherein the first supply path (34), the second supply path (38), the first return path (50), the second return path (52), the first outlet (42), the second outlet (46), the first inlet (54), and the second inlet (56) are fluidically connected to a cavity (58) of the valve body (28) in which the singular valve element (64) is accommodated.

10. The valve assembly (24) according to claim 9, wherein the cavity (58) and the singular valve element (64) at least partially have a cylindrical shape, a spherical shape and/or a conical shape.

11. The valve assembly (24) according to any of claims 2 to 10, wherein the singular valve element (64) is symmetric with respect to a middle plane (60) separating the first layer (30) and the second layer (32) and/or wherein the valve body (28) is symmetric with respect to the middle plane (60).

12. A valve system (110) comprising at least a first valve assembly (24) according to any of the preceding claims and a second valve assembly (24) according to any of the preceding claims,
wherein the first supply path (34) of the first valve assembly (24) is fluidically connected to the first supply path (34) of the second valve assembly (24),
wherein the first return path (50) of the first valve assembly (24) is fluidically connected to the first return path (50) of the second valve assembly (24),
wherein the second supply path (38) of the first valve assembly (24) is fluidically connected to the second supply path (38) of the second valve assembly (24), and
wherein the second return path (52) of the first valve assembly (24) is fluidically connected to the second return path (52) of the second valve assembly (24).

13. A method for controlling a flow of a first liquid (36) and a flow of a second liquid (40) in a vehicle (10) using a valve assembly (24) according to any one of claims 1 to 11, the method comprising at least one of
- branching off first liquid (36) from the first supply path (34) to the first component (44) only and bypassing second liquid (40) via the second supply path (38) in a first operational mode,
- branching off first liquid (36) from the first supply path (34) to the second component (48) only and bypassing second liquid (40) via the second supply path (38) in a second operational mode,
- branching off first liquid (36) from the first supply path (34) to the first component (44) and to the second component (48) and bypassing second liquid (40) via the second supply path (38) in a third operational mode,
- branching off second liquid (40) from the second supply path (38) to the first component (44) only and bypassing first liquid (36) via the first supply path (34) in a fourth operational mode,
- branching off second liquid (40) from the second supply path (38) to the second component (48) only and bypassing first liquid (36) via the first supply path (34) in a fifth operational mode,
- branching off second liquid (40) from the second supply path (38) to the first component (44) and to the second component (48) and bypassing first liquid (36) via the first supply path (34) in a sixth operational mode,
- branching off first liquid (36) from the first supply path (34) to the first component (44) only and branching off second liquid (40) from the second supply path (38) to the second component (48) only in a seventh operational mode,
- branching off first liquid (36) from the first supply path (34) to the second component (48) only and branching off second liquid (40) from the second supply path (38) to the first component (44) only in an eighth operational mode, and
- bypassing first liquid (36) via the first supply path (34) and bypassing second liquid (40) via the second supply path (38) in a ninth operational mode.

14. The method of claim 13, wherein an operational mode is selected by operating the singular valve element (64).

15. The method according to claim 13 or 14, further comprising adjusting a flow rate of the first liquid (36) and/or a flow rate of the second liquid (40) to the first component (44) and/or to the second component (48) proportionally by adjusting a position of the singular valve element (64).
